Europäisches Patentamt

European Patent Office

Office européen des brevets

(19)

(11) **EP 1 119 141 A1**

## (12) EUROPEAN PATENT APPLICATION
published in accordance with Art. 158(3) EPC

(43) Date of publication:
**25.07.2001 Bulletin 2001/30**

(21) Application number: **99940473.4**

(22) Date of filing: **25.08.1999**

(51) Int Cl.⁷: **H04L 12/40**

(86) International application number:
**PCT/JP99/04581**

(87) International publication number:
**WO 00/14929 (16.03.2000 Gazette 2000/11)**

(84) Designated Contracting States:
**AT BE CH CY DE DK ES FI FR GB GR IE IT LI LU MC NL PT SE**

(30) Priority: **03.09.1998 JP 24928598**

(71) Applicant: **Hitachi, Ltd.**
**Chiyoda-ku, Tokyo 101-8010 (JP)**

(72) Inventors:
  • **OKURA, Yoshinori, Hitachi Res. Lab.**
   **Hitachi-shi, Ibaraki319-1292 (JP)**

• **YAMADA, Tsutomu, Hitachi Res. Lab.**
 **Hitachi-shi, Ibaraki 319-1292 (JP)**
• **KUROSAWA, Kenichi,**
 **Omika Administrative Div.**
 **Hitachi-shi, Ibaraki 319-1221 (JP)**

(74) Representative: **Calderbank, Thomas Roger et al**
**MEWBURN ELLIS**
**York House**
**23 Kingsway**
**London WC2B 6HP (GB)**

## (54) REAL-TIME COMMUNICATION DEVICE AND SYSTEM

(57) Disclosed is a communication system capable of enhancing its processing performance independent of that of the CPU. The system comprises communication nodes each including: a communication controller for placing data to be transmitted with a transmission instruction onto a communication line and for writing data received from the transmission line to a storage device; and a data processor which, upon detecting the writing of the data received by the communication controller, computes a transmission time for data transmission by the communication node in question, the computing of the transmission time being performed on the basis of the received data and of data established beforehand in the communication node, the data processor further supplying the communication controller with a data transmission instruction causing the communication node to transmit data while counting the computed transmission time starting from a point in time at which completion of the writing of the data by the communication controller is detected.

F I G . 2

**Description**

TECHNICAL FIELD

The present invention relates to a method and an apparatus for real-time communication involving a plurality of communication nodes sharing a transmission line for real-time data transmission and reception. More particularly, the invention relates to a method and an apparatus for real-time communication capable of alleviating communication-related loads on CPUs (central processing units) in communication nodes while averting a data conflict over a transmission line thereby enhancing the use efficiency of the transmission line.

BACKGROUND ART

Among known methods and apparatuses for real-time communication is a real-time communication system discussed in "Ethernet/IEEE-802.3 Family 1990 World Network Data Book/Handbook," pp. 1-137, issued by Advanced Micro Devices, Inc. The system involves getting communication nodes to send and receive data frames over a transmission line on a hardware basis, with CPUs of the nodes utilizing software to effect transmission timing controls essential for real-time communication.

Under control of the transmission timing control software, the following takes place: each of the communication nodes required periodically to transmit data activates a periodical transfer timer that provides a periodical time-out operation. A frame called a token denoting the right for transmission is circulated among the configured nodes. When a node acquires the token for the first time since a time-out on its periodical transfer timer, the CPU of the node in question reads data to be transmitted from main memory or like storage facilities. The CPU then creates a transmission frame in keeping with a transmission format in which to transmit the target data over a transmission line. Each node is provided with a communication controller such as an IEEE 802.3-based LAN-capable communication controller described in the abovecited data book. The CPU supplies the communication controller of the node with an instruction to transmit the data-packed frame (the act of instructing the communication controller to effect a frame transmission is called a transmission start hereunder). When instructed to carry out a transmission start by the CPU, the communication controller sends the transmission frame onto the communication line.

Upon receipt of a frame from the communication line, the communication controller of a node notifies its CPU thereof by an interruption or like means. Given the notice, the CPU extracts data from the received frame and writes the received data to an appropriate location in main memory or like storage facilities.

As outlined above, the communication processing of conventional systems has been heavily dependent on software processing by the CPU.

DISCLOSURE OF INVENTION

One disadvantage of the above-described type of conventional system is that the processing speed of the CPU determines the speed of communication processing and hence the communication performance of the system as a whole. As another disadvantage, growing communication loads could require the CPU to devote most of its processing capability to communication-related chores. This may have adverse effects on other applications which must be dealt with by the CPU in addition to the communication processing. In particular, if a communication program is subject to tight real-time requirements, the bottleneck above could be more severe because the CPU must perform timer processing to guarantee real-time performance.

It is therefore an object of the present invention to overcome the above and other disadvantages of the prior art and to provide a method and an apparatus for real-time communication whereby the CPU is relieved of its severe real-time requirements of communication processing so that efficient transmission and excellent real-time performance are accomplished without increasing processing loads on the CPU.

In achieving the foregoing and other objects of the present invention and according to one aspect thereof, there is provided a real-time communication apparatus comprising: a communication controller for placing data to be transmitted with a transmission instruction onto a communication line and for writing data received from the transmission line to a storage device; and a data processor which, upon detecting the writing of the data received by the communication controller, computes a transmission time required for data transmission by a communication node having the communication controller, the computing of the transmission time being performed on the basis of the received data and of data established beforehand in the communication node, the data processor further supplying the communication controller with a data transmission instruction causing the communication node to transmit data while counting the computed transmission time starting from a point in time at which completion of the writing of the data by the communication controller is detected.

With the above structure, the communication controller and data processor combine to take care of communication processing. This relieves the CPU appreciably of its processing loads.

According to another aspect of the invention, there is provided a real-time communication apparatus comprising: a storage device for storing either data to be transmitted or received data; a communication controller for placing data to be transmitted with a transmission instruction onto a communication line and for writing data received from the transmission line to the storage device; a CPU which supplies the communication controller with a transmission instruction and which verifies whether the communication controller has ended the transmission; and a data processor for discarding the data received by the communication controller during transmission processing.

With this structure, the CPU is significantly relieved of its processing loads because it need only issue transmission instructions and verify whether each data transmission has been terminated.

BRIEF DESCRIPTION OF DRAWINGS

Fig. 1 is a system block diagram of a real-time communication apparatus embodying the invention;

Fig. 2 is a block diagram showing an internal structure of a data processor in the inventive real-time communication apparatus;

Fig. 3 is a block diagram indicating an internal structure of a communication control circuit in the inventive real-time communication apparatus;

Fig. 4 is a block diagram depicting an internal structure of a communication control information register circuit in the inventive real-time communication apparatus;

Fig. 5 is a block diagram illustrating an internal structure of a transmission/reception information storage circuit in the inventive real-time communication apparatus;

Fig. 6 is a block diagram showing an internal structure of a transmission/reception buffer in the inventive real-time communication apparatus;

Fig. 7 is a schematic view of a frame format for use by the inventive real-time communication apparatus;

Fig. 8 is a schematic view showing how to compute transmission timings of the inventive real-time communication apparatus;

Fig. 9 is a schematic view depicting a method for determining transmission order identifiers for use by the inventive real-time communication apparatus;

Fig. 10 is a flowchart of steps explaining a transmission and a reception process by the inventive real-time communication apparatus;

Fig. 11 is an explanatory view illustrating how the inventive communication controller works to transmit or receive data;

Fig. 12 is a schematic view of a transmission line configuration for use by the inventive real-time communication apparatus;

Fig. 13 is a schematic view of another transmission line configuration for use by the inventive real-time communication apparatus;

Fig. 14 is a block diagram showing an internal structure of another communication control information register circuit in the inventive real-time communication apparatus;

Fig. 15 is a schematic view depicting another method for determining transmission order identifiers for use by the inventive real-time communication apparatus;

Fig. 16 is a block diagram indicating an internal structure of a communication node in the inventive real-time communication apparatus;

Fig. 17 is a block diagram illustrating another internal structure of a communication node in the inventive real-time communication apparatus;

Fig. 18 is a block diagram showing an internal structure of another transmission/reception information storage circuit in the inventive real-time communication apparatus; and

Fig. 19 is a block diagram depicting another internal structure of a communication node in the inventive real-time communication apparatus.

BEST MODE FOR CARRYING OUT THE INVENTION

The best mode for carrying out the invention will now be described with reference to the accompanying drawings.

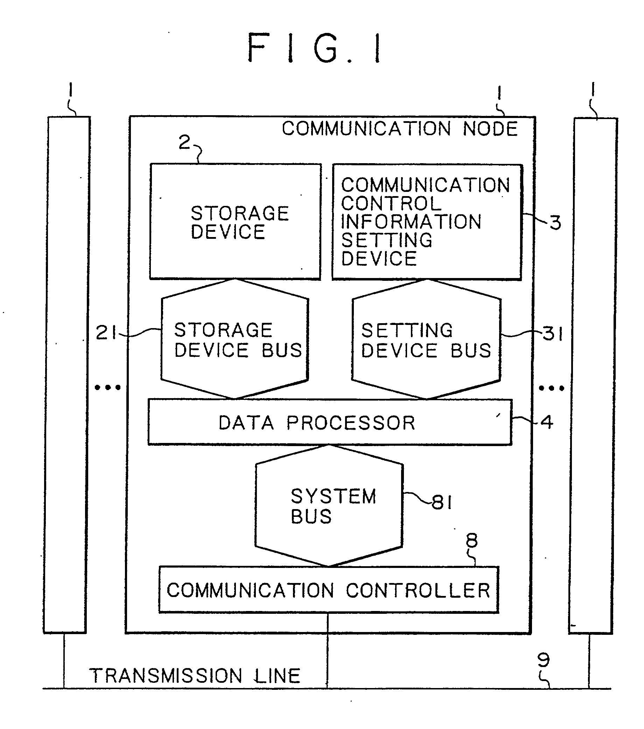

Fig. 1 shows a typical structure of a real-time communication apparatus embodying the invention. The apparatus constitutes a system having a plurality of communication nodes 1 connected to a transmission line 9. Data are exchanged among the communication nodes 1 over the transmission line 9.

The communication node 1 comprises a communication controller 8, a data processor 4, a system bus 81, a storage device 2, a storage device bus 21, a communication control information setting device 3, and a setting device bus 31. These components of the communication node 1 take care of communication processing in a manner alleviating loads on the CPU. In that respect, the communication node 1 may also include a CPU for handling application programs. In such a case, the storage device 2 accommodates application programs as well as results of program processing performed by the CPU. The workings of the components are outlined below. The communication controller 8 places frames onto the transmission line 9 for transmission or receives frames from the transmission line 9. The data processor 4 gets target data to be transmitted to undergo a transmission process before transferring the data to the communication controller 8, subjects a received frame transferred from the communication controller 8 to a reception process before extracting receive data therefrom, and controls data transmission timings. The system bus 81 connects the communication controller 8 with the data processor 4. The storage device 2 accommodates transmit data or receive data subject to the transmission or reception process by the data processor 4. The storage device bus 21 connects the storage device 2 with the data processor 4. The communication control information setting device 3 is used to establish in the data processor 4 settings necessary for the data processor 4 to carry out the transmission or reception process. The setting device bus 31 connects the communication control information setting device 3 with the data processor 4. In this specification, a bus signifies a cluster of signal lines.

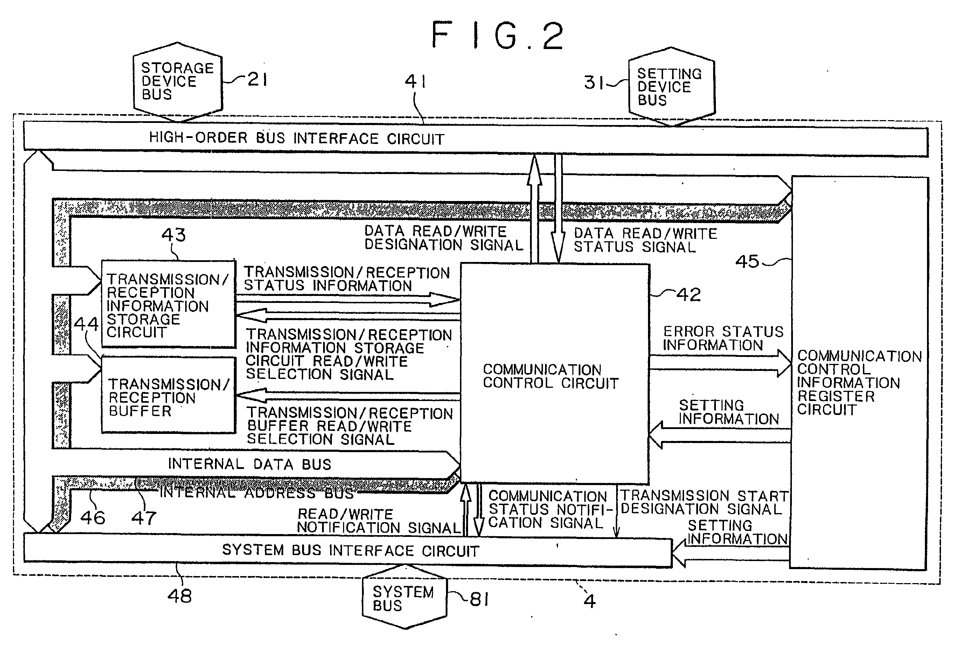

Fig. 2 depicts a typical structure of the data processor 4. The data processor 4 comprises a system bus interface circuit 48, a transmission/reception buffer 44, a transmission/reception information storage circuit 43, a communication control circuit 42, a communication control information register circuit 45, a high-order bus interface circuit 41, an internal address bus 46, and an internal data bus 47. Each of these components is explained below.

The system bus interface circuit 48 permits frames to be transmitted and received between communication controllers 8 over the system bus 81. Upon receipt of a read/write notification signal over the system bus 81 from the communication controller 8 indicating execution of a read or a write operation, the system bus interface circuit 48 notifies the communication control circuit 42 of that signal. If a write operation of the received frame is judged to have started because of a notification from the communication controller 8 indicating a start of the writing of that frame, with the data processor 4 currently performing a transmission process, the system bus interface circuit 48 discards the received frame. If a transmission start designation signal is received from the communication control circuit 42, the system bus interface circuit 48 supplies the communication controller 8 with a transmission start instruction in accordance with a predetermined procedure.

The transmission/reception buffer 44 temporarily accommodates transmit data or receive data at the time of a transmission or a reception process.

The transmission/reception information storage circuit 43 stores information about the data placed in the transmission/reception buffer 44, allows the communication controller 8 to read the information, causes the communication controller 8 to write status information about transmitted and received frames, and supplies the communication control circuit 42 with the status information.

The communication control circuit 42 controls the transmission and reception processes. When writing or reading information to or from the transmission/reception information storage circuit 43, the communication control circuit 42 decodes an address presented by the internal address bus 46 and issues accordingly a transmission/reception information storage circuit read/write selection signal indicating to or from which transmission/reception information storage circuit 43 to write or read the information. When writing or reading data to or from the transmission/reception buffer 44, the communication control circuit 42 decodes an address presented by the internal address bus 46 and issues accordingly a transmission/reception buffer read/write selection signal indicating to or from which transmission/reception buffer 44 to write or read the data. In addition, the communication control circuit 42 sends error status information to the communication control information register circuit 45. To the system bus interface circuit 48, the communication control circuit 42 sends a communication status notification signal indicating the current status (i.e., transmission or reception process under way), and a transmission start designation signal causing the system bus interface circuit 48 to issue a transmission start instruction to the communication controller 8. To the high-order bus interface circuit 41, the communication control circuit 42 sends a data read/write designation signal designating a data read operation during the transmission process or a data write operation during the reception process.

The communication control information register circuit 45 stores settings which are established by the communication control information setting device 3 and which are needed by the data processor 4 in carrying out the transmission or reception process. The communication control information register circuit 45 also stores in copied form transmission and reception status to be written by the communication controller 8 to the transmission/reception information storage circuit 43.

The high-order bus interface circuit 41 writes and reads data to and from the storage device 2 through the storage device bus 2 in accordance with a data read/write designation signal from the communication control circuit 42, and supplies the communication control circuit 42 with a data read/write status signal indicating the status (e.g., error) of the read or write operation. Furthermore, the high-order bus interface circuit 41 allows the communication control information setting device 3 to write settings to the data processor 4 through the setting device bus 31.

The internal address bus 46 and internal data bus 47 interconnect the high-order bus interface circuit 41, communication control circuit 42, transmission/reception information storage circuit 43, transmission/reception buffer 44, communication control information register circuit 45, and system bus interface circuit 48.

The transmission/reception information storage circuit 43 provides functions of both a transmission information storage circuit and a reception information storage circuit. Alternatively, the two circuits may be separately provided to accommodate transmission and reception information.

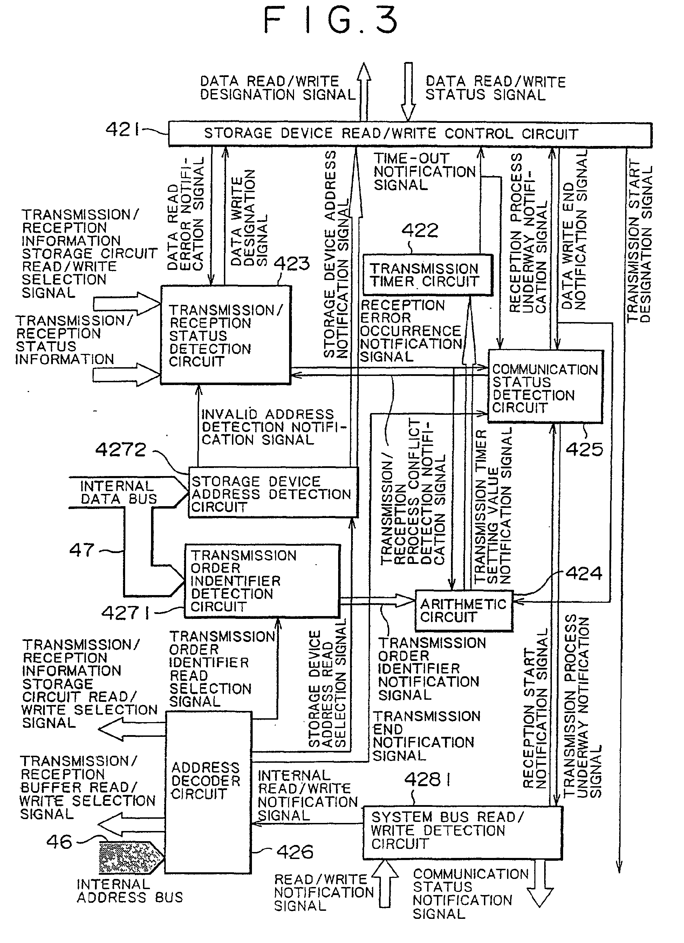

Fig. 3 depicts a typical structure of the communication control circuit 42. The communication control circuit 42 comprises a system bus read/write detection circuit 4281, an address decoder circuit 426, a transmission order identifier detection circuit 4271, a storage device address detection circuit 4272, a communication status detection circuit 425, a transmission/reception status detection circuit 423, an arithmetic circuit 424, a transmission timer circuit 422, and a storage device read/write control circuit 421. Each of these components is described below.

The system bus read/write detection circuit 4281 receives from the communication controller 8 a read/write notification signal indicating the occurrence of a read or a write operation through the system bus interface circuit 48, and supplies the address decoder circuit 426 with an internal read/write notification signal causing the circuit 426 to decode an address. The read/write notification signal will not be supplied if a write operation (i.e., of a received frame) is performed on the transmission/reception buffer during the transmission process by the data processor 4. In addition, the system bus read/write detection circuit 4281 supplies the system bus interface circuit 48 with a communication status notification signal indicating the current status of the data processor 4 (i.e., being in the transmission process, reception process, or other state). If a write operation (i.e., of a received frame) is effected to the transmission/reception buffer, the system bus read/write detection circuit 4281 sends a reception start notification signal to the communication status detection circuit 425.

On receiving an internal read/write notification signal from the system bus read/write detection circuit 4281, the address decoder circuit 426 decodes the address presented by the internal address bus 46. If the address indicates the transmission/reception buffer, the address decoder circuit 426 issues a transmission/reception buffer read/write selection signal. If the decoded address indicates the transmission/reception information storage circuit 43, the address decoder circuit 426 issues a transmission/reception information storage circuit read/write selection signal. If the decoded address is one which reveals a transmission order identifier from within the received frame on the internal data bus 47, the address decoder circuit 426 issues a transmission order identifier read selection signal. If the decoded address reveals a storage device address from within the received frame on the internal data bus 47, the address decoder circuit 426 issues a storage device address read selection signal. If the decoded address reveals a transmission status storage location inside the transmission/reception information storage circuit 43, the address decoder circuit 426 recognizes an end of the transmission process and issues a transmission end notification signal accordingly.

The transmission order identifier detection circuit 4271 extracts a transmission order identifier from within the received frame on the internal data bus 47 in accordance with a transmission order identifier read selection signal, and sends a transmission order identifier notification signal to the arithmetic circuit 424.

The storage device address detection circuit 4272 extracts a storage device address from within the received frame on the internal data bus 47 in accordance with a storage device address read selection signal, and sends a storage device address notification signal to the storage device read/write control circuit 421. If the extracted storage device address turns out to be an access-inhibited address, the storage device address detection circuit 4272 does not issue a storage device address notification signal. Instead, the storage device address detection circuit 4272 sends an invalid address detection notification signal to the transmission/reception status detection circuit 423.

If a reception start notification signal is yet to be received from the system bus read/write detection circuit 4281 upon receipt of a time-out notification signal from the transmission timer circuit 422, the communication status detection circuit 425 regards the received signal as indicative of the start of a transmission process, and sends accordingly a transmission process underway notification signal to the system bus read/write detection circuit 4281. When receiving a transmission end notification signal from the address decoder circuit 426, the communication status detection circuit 425 regards the received signal as indicative of the end of the transmission process and disables the transmission processing underway notification signal. If a reception start notification signal is received from the system bus read/write detection circuit 4281 while the transmission process is not under way, the communication status detection circuit 425 regards the received signal as indicative of the start of a reception process, and sends a reception process underway notification signal to the storage device read/write control circuit 421. If a data/write end notification signal (i.e., end of the writing of receive data) from the storage device read/write control circuit 421, the communication status detection circuit 425 regards the received signal as indicative of the end of the transmission process and disables the reception process underway notification signal accordingly. If a reception process start notification signal is received during the transmission process or if a time-out notification signal is received during the reception process, the communication status detection circuit 425 regards the received signal as indicative of a conflict between the transmission and the reception process (i.e., a communication error recognized), and issues a transmission/reception process conflict detection notification signal to the transmission/reception status detection circuit 423. If a reception error occurrence notification signal is received from the transmission/reception status detection circuit 423, the communication status detection circuit 425 regards the received signal as indicative of the end of the reception process, and disables the reception process underway notification signal accordingly.

If transmission/reception status information is received from the transmission/reception information storage circuit 43 reporting an error, if an invalid address detection notification signal is received from the storage device address detection circuit 4272, or if a transmission/reception process conflict detection notification signal is received from the communication status detection circuit 425, then the transmission/reception status detection circuit 423 forwards such error status information to the communication control information register circuit 45. If a reception error is reported in the form of transmission/reception status information or if an invalid address detection notification signal is received, the transmission/reception status detection circuit 423 sends a reception error occurrence notification signal to the arithmetic circuit 424 and communication status detection circuit 425. If the reception error occurrence notification signal is disabled, with the address decoder circuit 426 sending to the transmission/reception information storage circuit 43 a write selection signal designating a reception status write operation, the transmission/reception status detection circuit 423 issues a data write designation signal to the storage device read/write control circuit 421.

The arithmetic circuit 424 computes data transmission timings of the home node based on the node's transmission order identifier sent from the communication control information register circuit 45 as well as on the transmission order identifier in the received frame sent from the transmission order identifier detection circuit 4271 using a transmission order identifier notification signal. Upon receipt of a data write end notification signal from the storage device read/write control circuit 421, the arithmetic circuit 424 sends the result of the computation as a transmission timer setting notification signal to the transmission timer circuit 422 provided that a reception error occurrence notification signal has not been received from the transmission/reception status detection circuit 423.

On receiving the computed result from the arithmetic circuit 424 as the transmission timer setting notification signal, the transmission timer circuit 422 sets the received value to the transmission timer. Using the set value as the initial value, the transmission timer circuit 422 counts the timer down until the value 0 is reached on the timer. At that point, the transmission timer circuit 422 sends a time-out notification signal to the storage device read/write control circuit 421 and communication status detection circuit 425.

When a time-out notification signal is received from the transmission timer circuit 422, solely on condition that the reception process underway notification signal from the communication status detection circuit 425 remain disabled, the storage device read/write control circuit 421 issues a data read designation signal for requesting the high-order bus interface circuit 41 to read through DMA transfer from the storage device 2 the data designated by both the storage device address and the transmit data quantity specified by the communication control information register circuit 45. When notified of a normal end of the read operation from the high-order bus interface circuit 41 using a data read/write status signal, the storage device read/write control circuit 421 supplies the system bus interface circuit 48 with a transmission start designation signal for instructing the communication controller 8 to effect a transmission start. If a data write designation signal is received from the transmission/reception status detection circuit 423 while receiving the reception process underway notification signal from the communication status detection circuit 425, the storage device read/write control circuit 421 supplies the high-order bus interface circuit 41 with a data write designation signal designating that the receive data held in the transmission/reception buffer 44 be written through DMA transfer to that storage device address in the storage device 2 which is indicated by the storage device address notification signal sent from the storage device address detection circuit 4272. When notified of a normal end of the write operation from the high-order bus interface circuit 41 using a data read/write status signal indicating status (such as error), the storage device read/write control circuit 421 issues a data write end notification signal to the communication status detection circuit 425 and arithmetic circuit 424. If notified of the occurrence of an error during the data read operation from the high-order bus interface circuit 41 using a data read/write status signal, the storage device read/write control circuit 421 sends a data read error notification signal to the transmission/reception status detection circuit 423.

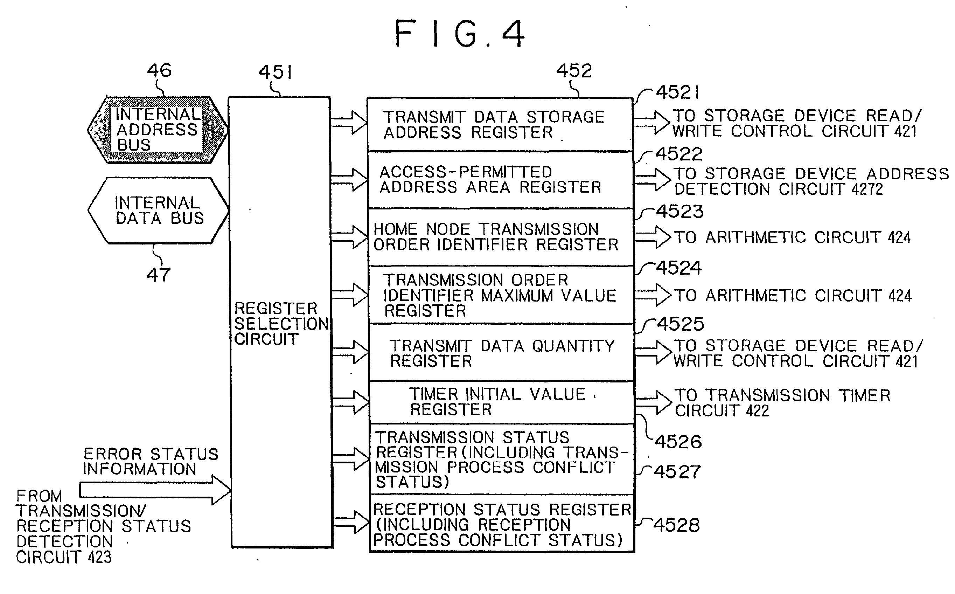

Fig. 4 shows a typical structure of the communication control information register circuit 45. The communication control information register circuit 45 comprises a register selection circuit 451, a transmit data storage address register 4521, an access-permitted address area register 4522, a home node transmission order identifier register 4523, a transmission order identifier maximum value register 4524, a transmit data quantity register 4525, a timer initial value register 4526, a transmission status register 4527, and a reception status register 4528. The register selection circuit 451 decodes the address presented by the internal address bus 46, and writes the data (value) on the internal data bus to the corresponding register. When a transmission/reception status write operation is initiated by the transmission/reception status detection circuit 423, the register selection circuit 451 writes the status in question to the corresponding register. The transmit data storage address register 4521 indicates the address at which to store the transmit data in the storage device 2. The address-permitted address area register 4522 represents that area in the storage device 2 to which the data processor 4 is allowed to gain access. The home node transmission order identifier register 4523 accommodates the transmission order identifier of the home node. The transmission identifier maximum value register 4524 indicates the maximum value of the transmission order identifier within the system. The transmit data quantity register 4525 represents the quantity of data to be transmitted from the home node. The timer initial value register 4526 indicates the initial value that is set immediately after a time-out on the transmission timer. The transmission status register 4527 and reception status register 4528 represent transmission and reception status respectively.

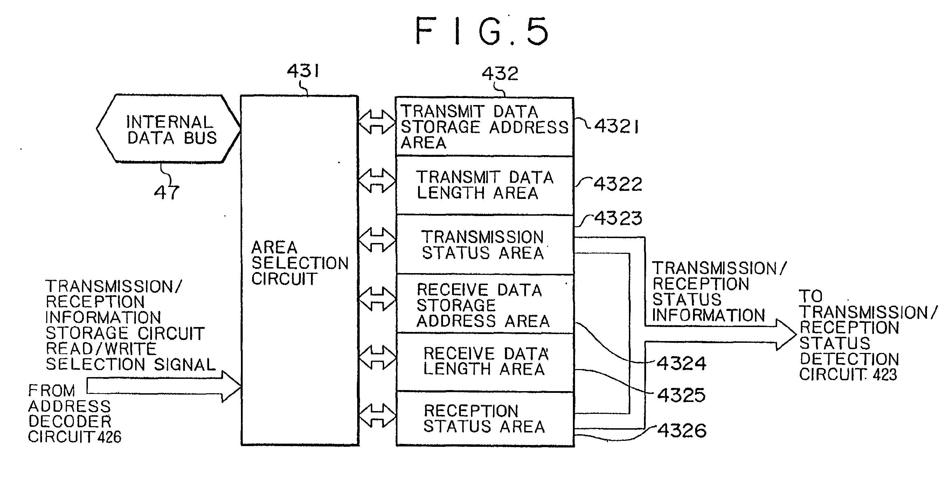

Fig. 5 shows a typical structure of the transmission/reception information storage circuit 43. The circuit 43 comprises a transmit data storage address area 4321, a transmit data length area 4322, a transmission status area 4323, a receive data storage address area 4324, a receive data length area 4325, a reception status area 4326, and an area selection circuit 431. The transmit data storage address area 4321 and transmit data length area 4322 indicate an address that holds transmit data immediately before they are read from the transmission/reception buffer 44, i.e., the target address in the transmission/reception buffer 44 which is viewed from the communication controller 8. The transmission status area 4323 is an area to which the communication controller 8 writes status in effect after the transmit data are read from the transmission/reception buffer 44. The receive data storage address area 4324 represents an address to which to write previously read receive data in the transmission/reception buffer 44, i.e., the target address in the transmission/reception buffer 44 which is viewed from the communication controller 8. The reception status area 4326 is an area to which the communication controller 8 writes status in effect after the value of the receive data length area 4325 and receive data are written to the transmission/reception buffer 44. The area selection circuit 431 allows data over the internal data bus 47 to be written to or read from the area designated by a transmission/reception information storage circuit read/write selection signal from the address decoder circuit 426.

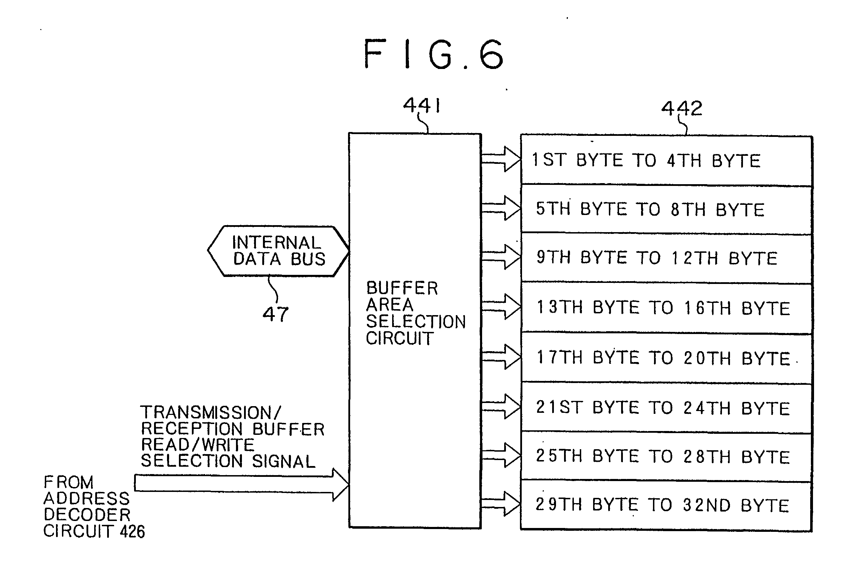

Fig. 6 depicts a typical structure of the transmission/reception buffer 44. Although the size of the transmission/reception buffer 44 shown in Fig. 4 is illustratively 32 bytes, the buffer size may vary depending on the systems handling different quantities of data to be transmitted and received. The example in Fig. 6 has an internal data bus four bytes wide. In the buffer, data are stored into areas four bytes wide each from the top down, each area being designated by the buffer area selection circuit 441.

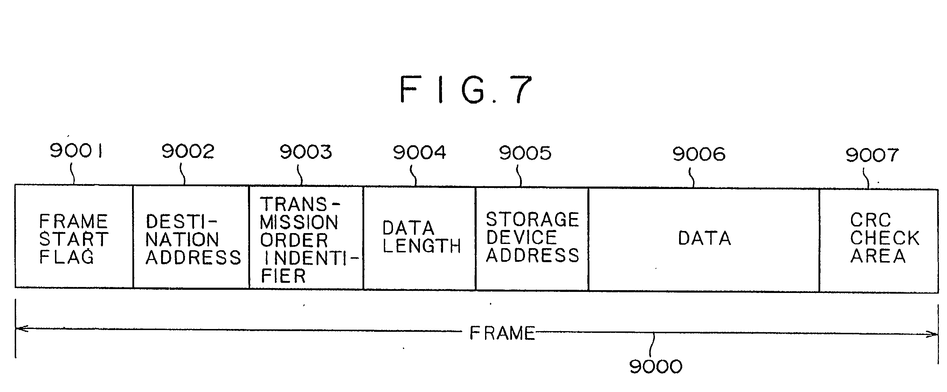

Fig. 7 illustrates a typical format of a frame 9000 transmitted by each communication node 1. The frame 9000 comprises: a frame start flag 9001 with which the communication controller 8 detects the starting position of the frame transmitted over the transmission line; a destination address 9002; a transmission order identifier 9003 representing the transmission order set to each node; a data length 9004; a storage device address 5009 indicating that address in the storage device to which the communication node 1 having received this frame writes data; data 9006; and a CRC check area 9007 with which the communication controller 8 of the receiving node 1 checks the validity of the received frame.

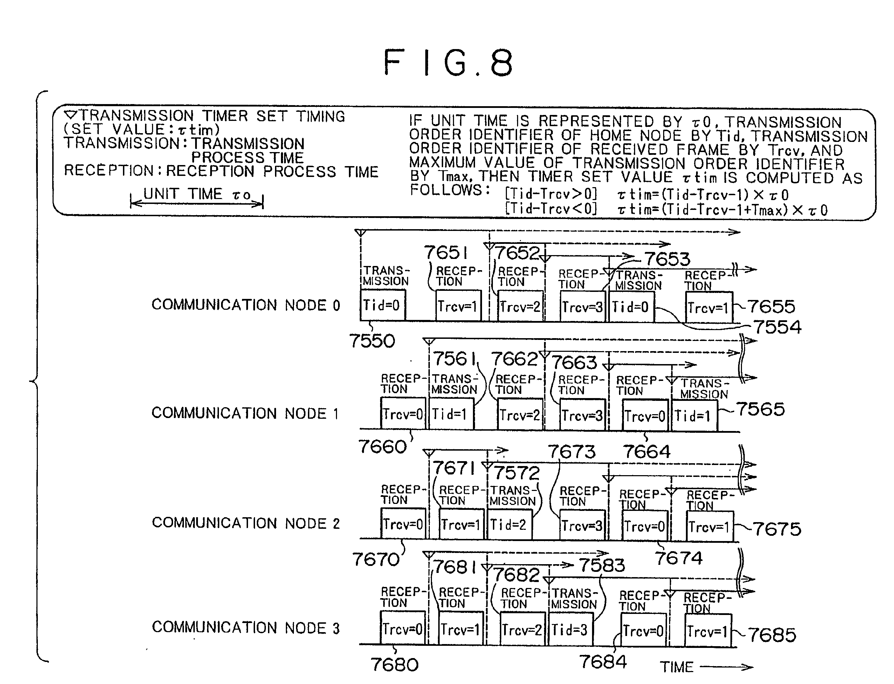

Described below with reference to Fig. 8 is how the arithmetic circuit 424 of the embodiment illustratively computes transmission timings. In Fig. 8, transmission process times 7550, 7561, etc., each represent the time required for a transmission process to be performed inside a given communication node 1, and reception process times 7651, 7660, etc., each denote the time it takes for a reception process to be carried out inside each communication node 1. A unit time $\tau$o is first determined. The unit time $\tau$o may be set illustratively to equal the worst time period from the time a communication node starts transmitting data of a predetermined length until a destination node completes reception of the transmitted data (i.e., the sum of the longest processing time that elapses at the transmitting node 1, of the time it takes the frame to propagate over the transmission line 9 between the farthest communication nodes, and of the longest processing time that elapses in the receiving node 1). The value to be set by the transmission timer circuit 422 to the transmission timer immediately after a time-out is that which is indicated by the timer initial value register 4526 of the communication control information register circuit 45. Illustratively, the value is obtained by having the unit time $\tau$o multiplied by a value Tmax indicated by the identifier maximum value register 4524 of the communication control information register circuit 45. A timer set value $\tau$tim sent by the arithmetic circuit 424 to the transmission timer circuit 422 at the end of a reception process is determined illustratively by use of the expressions shown below. For the expressions, it is assumed that the home node transmission order identifier indicated by the home node transmission order identifier register 4523 of the communication control information register 45 is represented by Tid and that the transmission order identifier extracted from the received frame sent by the transmission order identifier detection circuit 4271 is denoted by Trcv.

$$\bullet \text{ If Tid - Trcv} > 0, \text{ then } \tau tim = (\text{Tid - Trcv - 1}) \times \tau o \qquad (1)$$

$$\bullet \text{ If Tid - Trcv} < 0, \text{ then } \tau tim = (\text{Tid - Trcv - 1 + Tmax}) \times \tau o \qquad (2)$$

As long as transmission order identifiers are normally established in the system, there should not be a case where Tid - Trcv = 0. When the transmission timer circuit 422 has been set in the manner described above, the configured communication nodes 1 perform transmit and receive operations as shown in Fig. 8. When the timer set value $\tau$tim set on the transmission timer circuit 422 at the end of a reception process is found to be zero through the use of the expression (1) or (2) above, a transmission process is allowed to start following a time-out on the transmission timer circuit 422 immediately after the writing of receive data to the storage device 2. This scheme minimizes any idle time that may elapse between the current transmission or reception process and the next transmission or reception process in each communication node 1. When the intervals between frames flowing over the transmission line 9 are shortened in the above manner, the transmission line 9 may be employed in a highly efficient fashion.

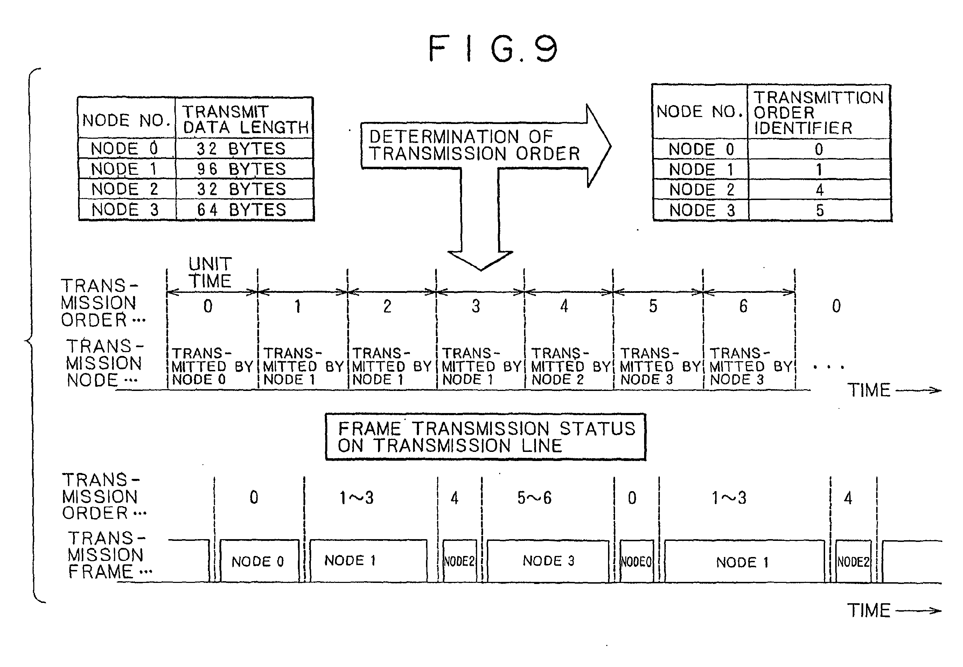

Fig. 9 shows a typical method for establishing transmission order identifiers. Suppose that four communication nodes (numbered 0, 1, 2 and 3) transmit 32 bytes, 96 bytes, 32 bytes and 64 bytes of data respectively; that the unit time $\tau$ o is the worst time it takes to transmit or receive 32 bytes of data; and that transmission order identifiers are numbered from 0 to 6 as shown in Fig. 9 and are assigned to the nodes in a way relevant to the transmit data length for each communication node. Illustratively, the transmission order identifier 0 is assigned to the communication node 0, the transmission order identifier 1 to the communication node 1, the transmission order identifier 4 to the communication node 2, and the transmission order identifier 5 to the communication node 3. With the node-identifier assignments thus established, the data are transmitted and received in frames issued by the communication nodes as depicted in Fig. 9.

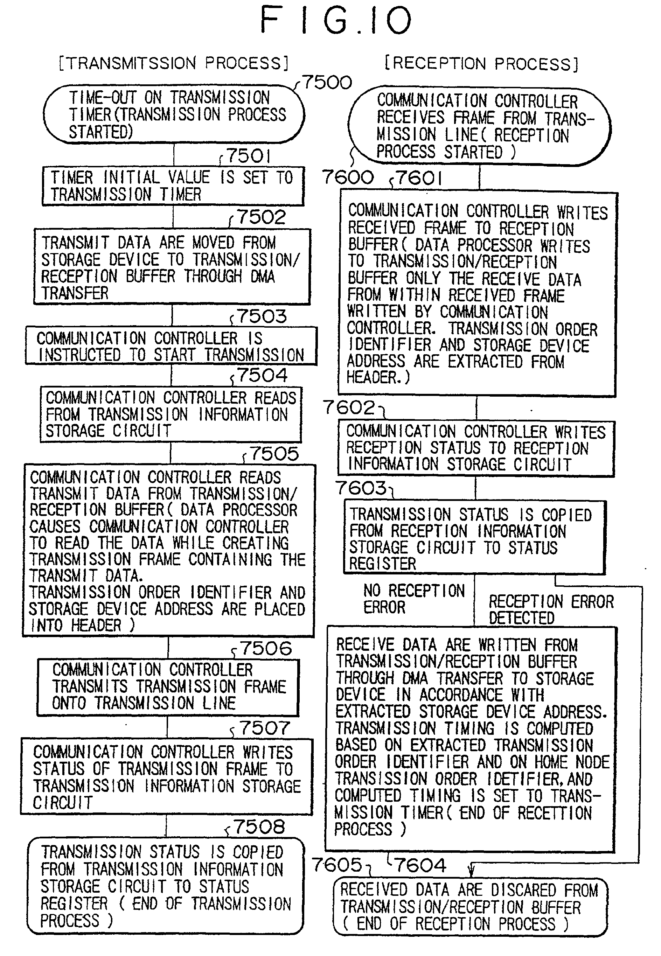

Communication processing will now be described with reference to Fig. 10. The transmission process is explained first.

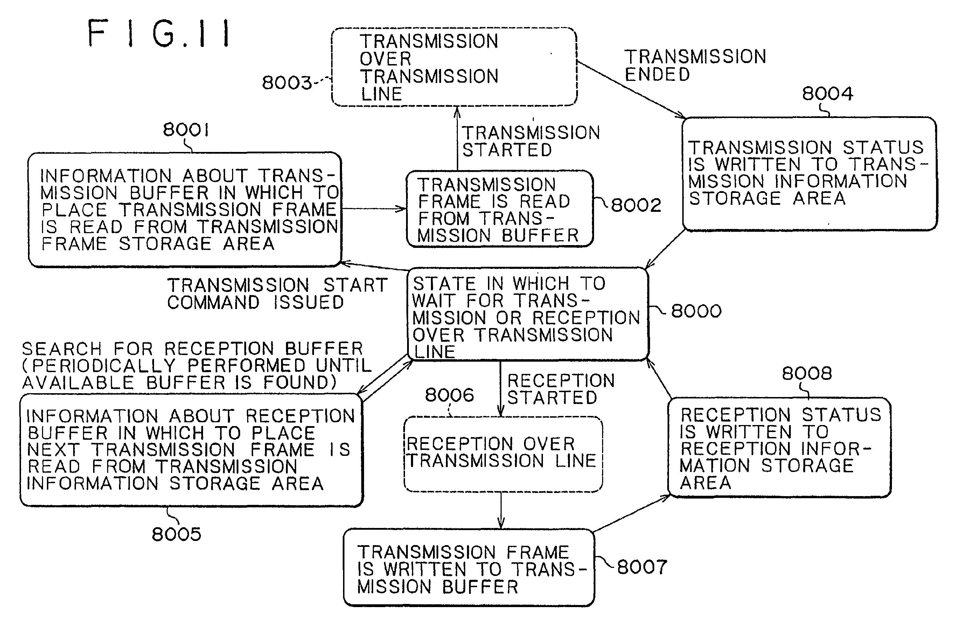

At a time-out on the transmission timer circuit 422, the timer initial value is set to the transmission timer circuit 422. Transmit data are read from the storage device 2 through DMA transfer and placed into the transmission/reception buffer 44. With the transmit data placed in the transmission/reception buffer 44, the communication controller 8 is instructed to effect a transmission start. In turn, the communication controller 8 transmits a transmission frame over the transmission line 9 by following a procedure illustrated in Fig. 11. It should be noted that when the communication controller 8 reads the transmit data from the transmission/reception buffer 44, the data processor 4 creates a frame in accordance with the transmission format for data transmission over the transmission line 9, and causes the communication controller 8 to read the frame thus created. More specifically, when the data processor 4 finds that the communication controller 8 is to read a transmission frame, the data processor 4 first generates a frame overhead such as a destination address and causes the communication controller 8 to read it. The data processor 4 then creates a transmission order identifier of the home node and gets the controller 8 to read it. The data processor 4 proceeds to have the communication controller 8 gain access to the storage device address at which the transmit data are held. Thereafter, the data processor 4 causes the communication controller 8 to read the transmit data from the transmission/reception buffer 44. After terminating the transmission of the data onto the transmission line 9, the communication controller 8 writes transmission status to the transmission/reception information storage circuit 43. The data processor 4 copies the written transmission status to the communication control information register circuit 45 before terminating the transmission process.

The reception process is described below. On receiving a frame from the transmission line 9, the communication controller 8 writes the received frame to the transmission/reception buffer 44 in accordance with the procedure shown in Fig. 11. After that, the communication controller 8 writes reception status to the transmission/reception information storage circuit 43. The data processor 4 copies the written reception status to the communication control information register circuit 45. Specifically, when the data processor 4 finds that the communication controller 8 writes the received frame to the transmission/reception buffer 44, the data processor 4 deletes the frame overhead such as the written destination address, extracts a transmission order identifier from the thus-written received frame, extracts a storage device address from the received frame, and writes only the receive data from within the received frame to the transmission/reception buffer 44. If the reception status contains no error, the extracted transmission order identifier is sent to the arithmetic circuit 424, and the extracted storage device address is forwarded to the storage device address detection circuit 4272. If the reception status contains any error, then the extracted transmission order identifier is not sent to the arithmetic circuit 424, nor is the extracted storage device address fed to the storage device address detection circuit 4272.

At the end of the reception process, with no error found in the reception status, the received data placed in the transmission/reception buffer 44 are written to the storage device 20 in accordance with the extracted storage device address. The arithmetic circuit 424 computes the transmission timing based on the extracted transmission order identifier and on the transmission order identifier set in the home node. The computed result is set to the transmission timer circuit 422. If the reception status contains any error, nothing is written to the storage device 2. In this case, the arithmetic circuit 424 does not compute the transmission time and nothing is set to the transmission timer circuit 422.

Each communication node 1 is assigned its unique transmission order identifier in advance. The arithmetic circuit 424 performs its computation using the transmission order identifier set on the home node and the extracted transmission order identifier. The computations are performed in such a manner that their results vary from one communication node to another.

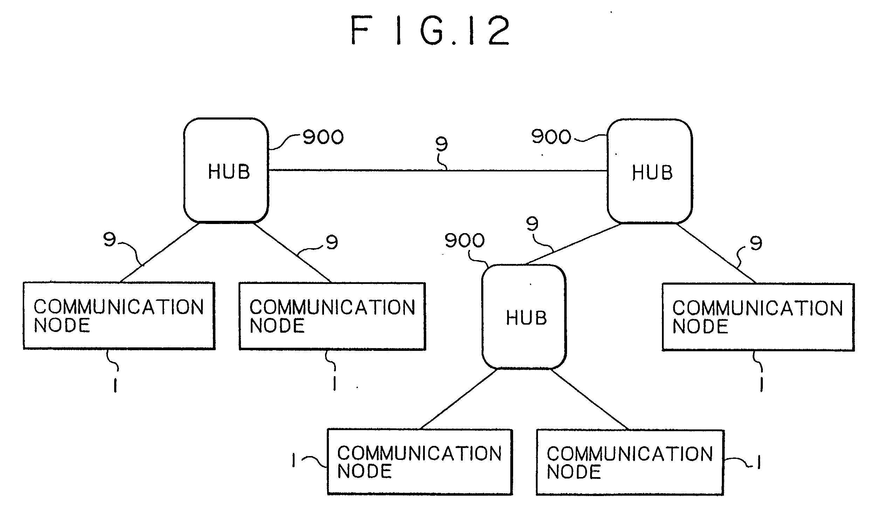

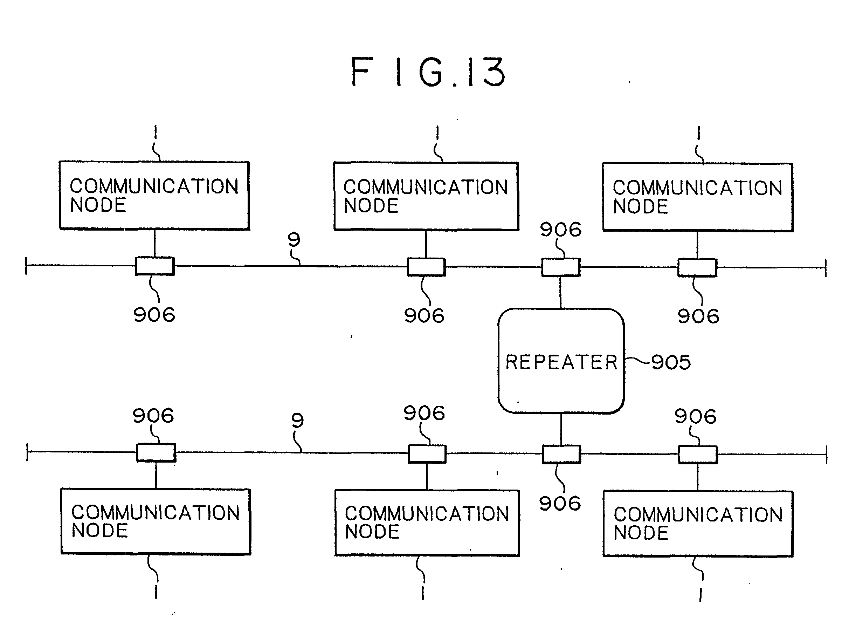

Examples of the transmission line 9 used by this embodiment include a star-connection network shown in Fig. 12, and a bus-connection network depicted in Fig. 13.

In the above-described embodiment, the frame 9000 transmitted by each communication node 1 has a variable length. Alternatively, the frame 9000 may have a fixed length when transmitted by any communication node 1. In that case, a communication node 1 attempting to transmit a large quantity of data divides the target data into a plurality of frames for transmission.

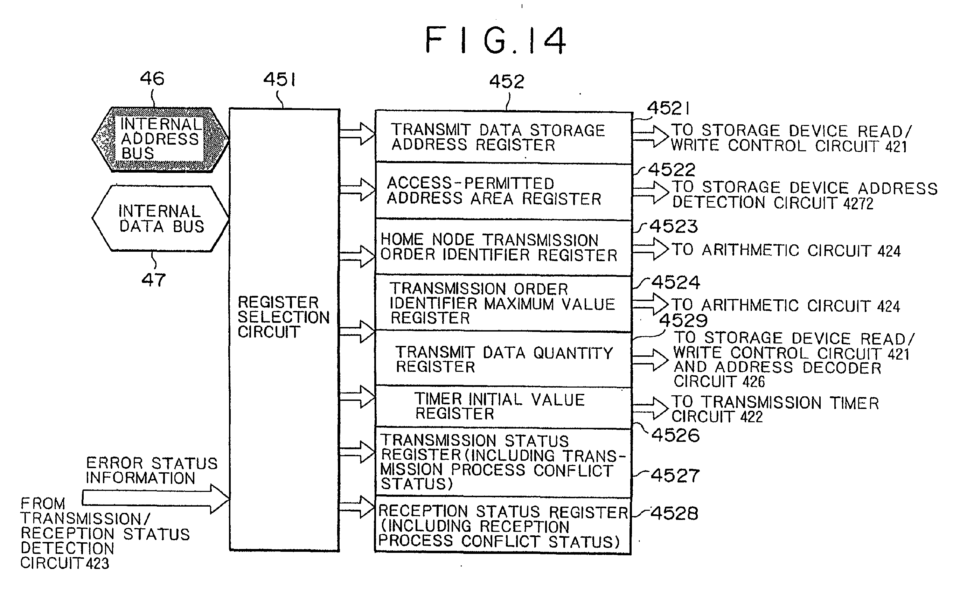

In another structure based on the same method of the above-described embodiment, the transmit data quantity register 4525 in Fig. 4 may be replaced by a transmission frame count register 4529 for indicating the number of transmission frames as shown in Fig. 14. The communication control circuit 42 of this structure is basically the same in function as that in Fig. 3, with the exception of the following differences: the storage device read/write control circuit 421 in Fig. 3 in the makeup of Fig. 14 is supplemented by a function which, every time a time-out signal is received from the transmission timer circuit 422, allows a frame transmission to be repeated as many times as the number of transmission frames set in the transmission frame count register 4529. The address decoder circuit 426 in Fig. 3 is supplemented in the makeup in Fig. 14 by a function which, every time the transmission process underway notification signal from the communication status detection circuit 425 is enabled, starts counting the number of times the address indicating the transmission status storage location in the transmission/reception information storage circuit 43 appears on the internal address bus 46. When the count value reaches a value equal to the content of the transmission frame count register 4529, the added function recognizes the end of the transmission process and issues a transmission end notification signal accordingly.

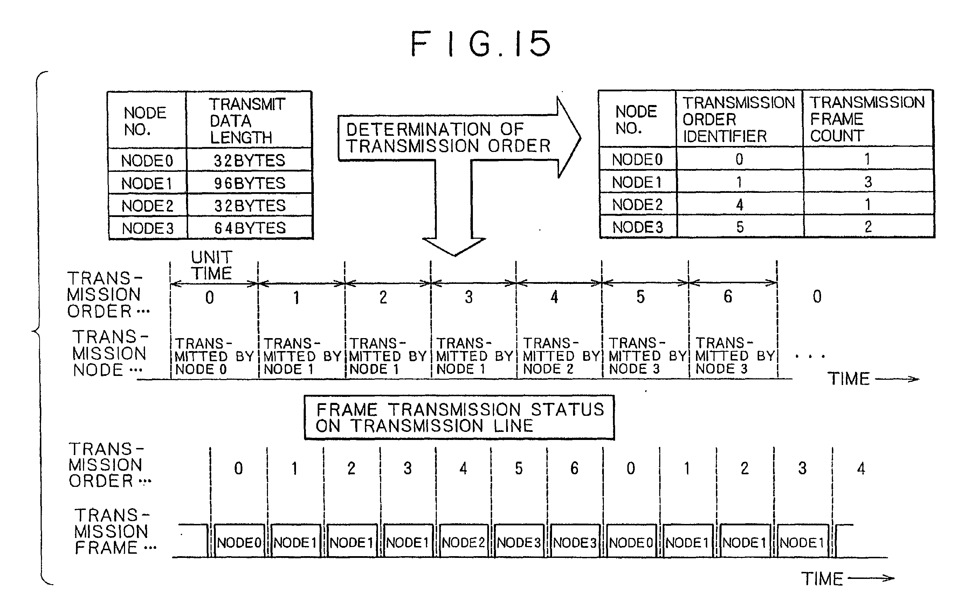

Fig. 15 shows another method for determining transmission order identifiers. Suppose that four communication nodes (numbered 0, 1, 2 and 3) transmit 32 bytes, 96 bytes, 32 bytes and 64 bytes of data respectively; that data are transmitted 32 bytes at a time in a fixed-length frame; that the unit time $\tau_0$ is the worst time it takes to transmit or receive 32 bytes of data; and that transmission order identifiers are numbered from 0 to 6 as shown in Fig. 15 and are assigned to the nodes in a way relevant to the transmit data length for each communication node. Illustratively, the transmission order identifier 0 is assigned to the communication node 0, the transmission order identifier 1 to the communication node 1, the transmission order identifier 4 to the communication node 2, and the transmission order identifier 5 to the communication node 3. The communication node 1 continuously transmits frames with the transmission order identifiers 1, 2 and 3, while the communication node 3 consecutively transmits frames with the transmission order identifiers 5 and 6. With the node-identifier assignments thus established, the data are transmitted and received in frames issued by the communication nodes as depicted in Fig. 15.

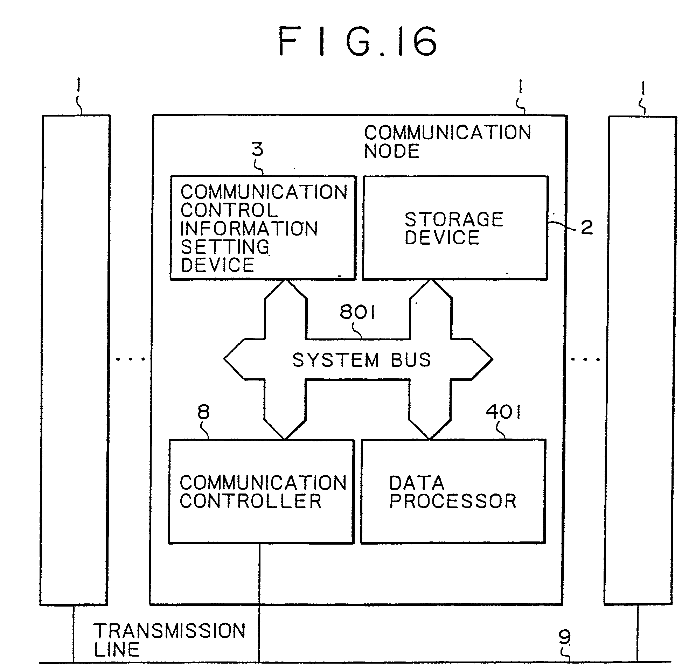

As shown in Fig. 1, the above-described embodiment comprises the system bus 81, storage device bus 21 and setting device bus 31 separately. However, the separate bus arrangement is not limitative of the invention. Alternatively, a single bus structure may be provided to include part or all of the functions of the system bus 81, the storage device bus 21 and setting device bus 31, as illustrated in Fig. 16. The example of Fig. 16 comprises a system bus 801 that doubles functionally as the storage device bus 21 and setting device bus 31. Specifically, the system bus 801 is connected to a communication controller 8, a data processor 401, a storage device 2, and a communication control information setting device 3. The workings of the communication controller 8, data processor 401, storage device 2 and communication control information setting device 3 coupled to the system bus 801 will not be described here because these components have the same functions as those of their counterparts in the embodiments described earlier and perform data processing in like manner.

As described, the data processor 4 allows all frames to be exchanged with the communication controller 8. From the viewpoint of the communication controller 8 functioning just like its conventional counterpart, the data processor 4 acts as a virtual storage device (corresponding to a conventional storage device 102). That is, any conventional communication controller of the comparable type may be used unmodified and a CPU 30 is allowed solely to write and read data to and from the storage device 20 in connection with application programs unrelated to communication processing. Under this scheme, any increase in communication-related loads is dissociated from the processing loads on the CPU so that the throughput of the communication system as a whole will be enhanced regardless of the performance of the CPU. Furthermore, the data processor 4 can control the timing of data transmission from the home node in a rapid and reliable manner (in order to verify the transmission/reception status) while carrying out the transmission or reception process. This makes it possible to transmit or receive frames (i.e., data transfers between the transmission line 9 and the storage device 20) in increments of a unit time hitherto unachievable with conventional systems (on the order of tens of microseconds or less). With the conventional transmission line still in use, the inventive apparatus provides significantly enhanced operating efficiency.

Freed from the chores of transmission and reception processing as described above, the CPU is dedicated to the handling of application software. For example, consider a system in which the CPU performs application programs for executing arithmetic operations using data held in a storage device and storing results of the operations into the storage device, receives data over a transmission line from other communication nodes before placing the received data into the storage device, and transmits computed results from the storage device to other communication nodes over the transmission line. Conventionally, the CPU of the above system is required to handle data transmission and reception processes besides executing arithmetic operations and writing and reading data to and from the storage device. According to the invention, by contrast, the CPU need not carry out such data transmission or reception processes; the CPU need only execute arithmetic operations and write or read data to or from the storage device. Write and read operations of the CPU are timed independently of data transmission and reception. When an attempt by the CPU to access the storage device coincides with an attempt by the data processor to access the storage device, either the CPU or the data processor may be given the priority for access to the storage device. Where the processing speed of the CPU is emphasized, the CPU is given the priority; if the transmission/reception speed over the network is stressed, then the data processor is given the priority.

The setups discussed so far have shown the CPU to be completely freed from communication-related chores so that the loads on the CPU are reduced considerably.

What follows is a description of structures in which the CPU handles part of the communication processing in such a manner that the loads on the CPU are still alleviated appreciably.

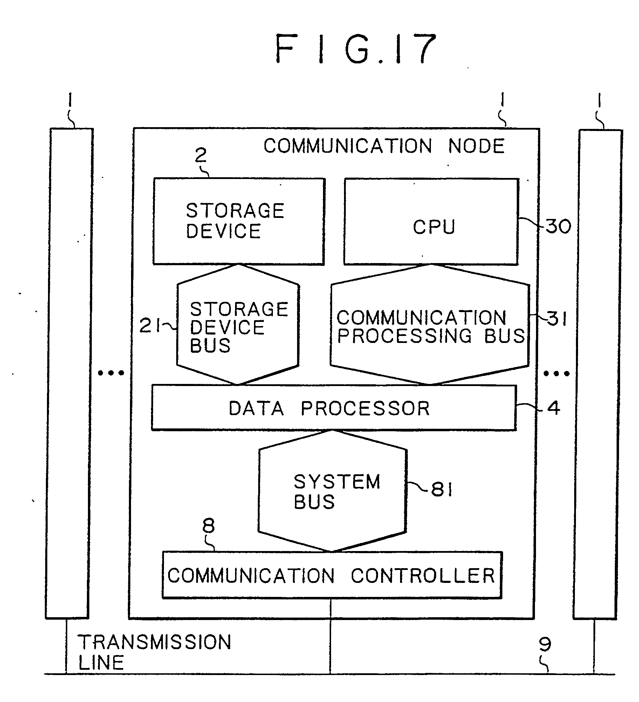

Fig. 17 shows a system configuration of a real-time communication apparatus also embodying the invention. The setup of Fig. 17 is basically the same as that of Fig. 6 except for the structure of each communication node 1.

The communication node 1 comprises a communication controller 8, a data processor 4, a system bus 81, a storage device 2, a storage device bus 21, a CPU 30, and a communication processing bus 31. In the communication node 1 of this structure, the CPU 30 handles part of communication processing. More specifically, the CPU 30 requests the communication controller 8 to initiate data transmission and verifies whether the communication controller 8 has terminated transmission of each frame. Whereas the data processor in Fig. 1 initiates transmission on its own, the CPU in the system of Fig. 17 takes care of the transmission initiation.

The data processor 4 has substantially the same structure as that in Fig. 2 and comprises a system bus interface circuit 48, a transmission/reception buffer 44, a transmission/reception information storage circuit 43, a communication control circuit 42, a communication control information register circuit 45, an internal address bus 46, and an internal data bus 47. Since the CPU 30 in this system issues a transmission start designation signal, there is no communication start designation signal that would be sent from the communication control circuit 42 in the setup of Fig. 2 to the system bus interface 48. With the communication start designation signal issued by the CPU 30, the high-order bus interface circuit 41, communication control circuit 42 and system bus interface circuit 48 in the data processor 4 of Fig. 2 operate in the manner described below.

The system bus interface circuit 48 transmits and receives frames to and from the communication controller 8 over the system bus 81, and supplies the communication control circuit 42 with a read/write notification signal indicating the communication controller 8 executing a read or a write operation. If the data processor 4 is carrying out its transmission process when the writing of a received frame by the communication controller 8 has started, the system bus interface circuit 48 discards the received frame.

The communication control circuit 42 controls transmission and reception processes. At a write or a read operation to or from the transmission/reception information storage circuit 43 and transmission/reception buffer 44, the communication control circuit 42 decodes the address presented by the internal address bus 46, and issues accordingly a transmission/reception information storage circuit read/write selection signal or a transmission/reception buffer read/write selection signal indicating to or from which circuit to write or read the data. In addition, the communication control circuit 42 sends status information to the communication information control register circuit 45, supplies the system bus interface circuit 48 with a communication status notification signal indicating the current status (transmission or reception process under way), and provides the high-order bus interface circuit 41 with a data read/write designation signal designating either a data read operation if the transmission process is under way or a data write operation if the reception process is being performed.

In keeping with the data read/write designation signal from the communication control circuit 42, the high-order bus interface circuit 41 controls the storage device bus 21 to write or read data to or from the storage device 2. The high-order bus interface circuit 41 supplies the communication control circuit 42 with a data read/write status signal indicating the status (such as an error) in effect at the time of the read or write operation. Furthermore, the high-order bus interface circuit 41 controls the setting device bus 31 to write or read data to or from the CPU 30.

The transmission/reception information storage circuit 43 doubles functionally as a transmission information storage circuit and a reception information storage circuit. Alternatively, separate circuits may be provided to accommodate transmission and reception information.

The communication control circuit 42 has substantially the same structure as that in Fig. 3. The circuit 42 comprises a system bus read/write detection circuit 4281, an address decoder circuit 426, a transmission order identifier detection circuit 4271, a storage device address detection circuit 4272, a communication status detection circuit 425, a transmission/reception status detection circuit 423, an arithmetic circuit 424, a transmission timer circuit 422, and a storage device read/write control circuit 421.

As described already, the CPU 30 of this system is arranged to issues the transmission start designation signal. That is, unlike in the setup in Fig. 3, the storage device read/write control circuit 421 does not output a transmission start designation signal.

In the structure outlined above, the storage device read/write control circuit 421 works as follows: when a time-out notification signal is received from the transmission timer circuit 422, solely on condition that the reception process underway notification signal from the communication status detection circuit 425 remain disabled, the storage device read/write control circuit 421 issues a data read designation signal for requesting the high-order bus interface circuit 41 to read through DMA transfer from the storage device 2 the data designated by both the storage device address and the transmit data quantity specified by the communication control information register circuit 45. If a data write designation signal is received from the transmission/reception status detection circuit 423 while a reception process underway notification signal is being received from the communication status detection circuit 425, the storage device read/write control circuit 421 issues a data write designation signal for requesting the high-order bus interface circuit 41 to write the receive data through DMA transfer from the transmission/reception buffer 44 to that address in the storage device 2 which is designated by a storage device address notification signal coming from the storage device address detection circuit 4272. When notified of a normal end of the write operation from the high-order bus interface circuit 41 using a data read/write status signal indicating status (such as error), the storage device read/write control circuit 421 issues a data write end notification signal to the communication status detection circuit 425 and arithmetic circuit 424. If notified of the occurrence of an error during the data read operation from the high-order bus interface circuit 41 using a data read/write status signal, the storage device read/write control circuit 421 sends a data read error notification signal to the transmission/reception status detection circuit 423.

The communication control information register circuit 45 has the same structure as that in Fig. 4. A user utilizing this communication system is supposed to set desired values in the transmission data storage address register 4521, access-permitted address area register 4522, home node transmission order identifier register 4523, transmission order identifier maximum value register 4524, transmit data quantity register 4525, and timer initial value register 4526.

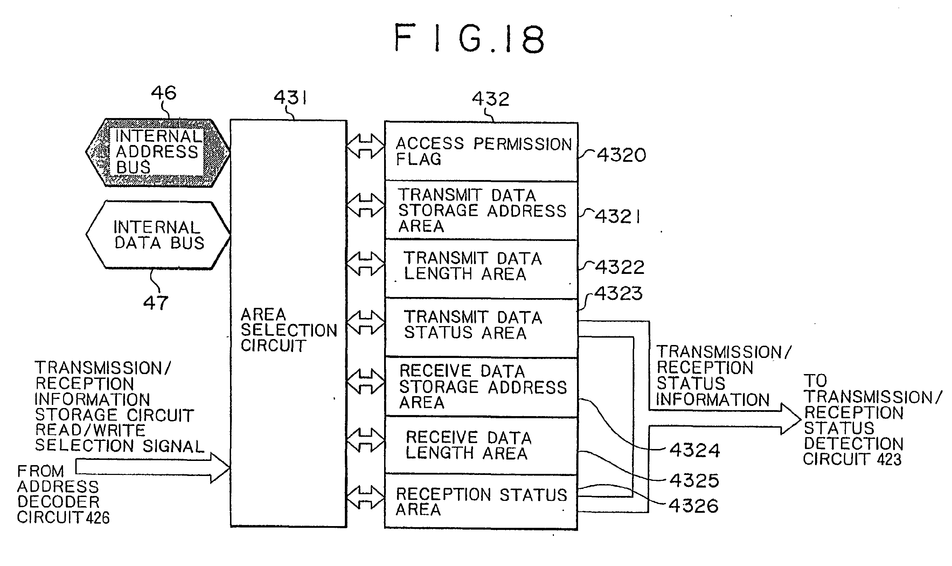

Fig. 18 depicts a typical structure of the transmission/reception information storage circuit 43. The circuit 43 comprises a transmission data storage address area 4321, a transmit data length area 4322, a transmission status area 4323, a receive data storage address area 4324, a receive data length area 4325, a receive status area 4326, and an area selection circuit 431.

The transmit data storage address area 4321 and transmit data length area 4322 indicate an address that holds transmit data immediately before they are read from the transmission/reception buffer 44, i.e., the target address in the transmission/reception buffer 44 which is viewed from the communication controller 8. The transmission status area 4323 is an area to which the communication controller 8 writes status in effect after the transmit data are read from the transmission/reception buffer 44. The receive data storage address area 4324 represents an address to which to write previously read receive data in the transmission/reception buffer 44, i.e., the target address in the transmission/reception buffer 44 which is viewed from the communication controller 8. The reception status area 4326 is an area to which the communication controller 8 writes status in effect after the receive data length area 4325 and receive data are written to the transmission/reception buffer 44. The area selection circuit 431 allows data over the internal data bus 47 to be written to or read from the area designated by a transmission/reception information storage circuit read/write selection signal from the address decoder circuit 426.

The transmission/reception buffer 44 has the same structure as that in Fig. 6.

Below is a description of processing performed by the CPU 30 for communicative purposes using the above-described structure.

At a time-out on the transmission timer circuit 422, the transmission/reception status detection circuit 423 is informed of a transmission start. The transmission start notification is fed to the transmission status register 4527.

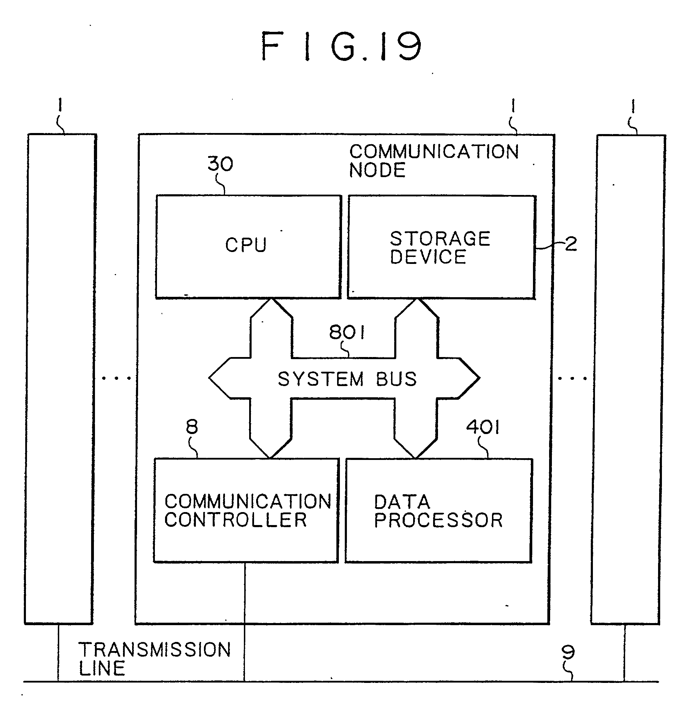

On detecting the transmission start notification to the transmission status register 4527, the CPU 30 first sets a flag that permits access to the transmission/reception information storage circuit 43 by the communication controller 8. The access permission flag may be provided inside the transmission/reception information storage circuit 43 as illustrated in Fig. 19.

With the access permission flag 4320 thus set, the CPU 30 issues a transmission start instruction to the communication controller 8.

All operations of transmission following the issuance of the transmission start instruction till the end of a frame transmission onto the transmission line 9 are carried out by the data processor 4 and communication controller 8. The CPU 30 has nothing to do with such transmission-related processing.

At the end of the frame transmission onto the transmission line 9, the communication controller 8 writes transmission status to the transmission/reception information storage circuit 43 (specifically to the transmission status area 4323 in Fig. 18). The CPU 30 verifies the written transmission status (in the transmission status area 4323 in Fig. 18) before terminating the transmission process. No further communication-related processing is performed by the CPU 30 until the next start of transmission is reported thereto.

The CPU is totally dissociated from the reception process. All reception-related operations are carried out by the data processor 4 and communication controller 8.

**EP 1 119 141 A1**

The format of frames transmitted by each communication node 1 of this system is the same as that shown in Fig. 7. The transmission timings of the arithmetic circuit 424 in the system are the same as those depicted in Fig. 8.

In the embodiment described above, the frame 9000 transmitted by each communication node 1 has a variable length. Alternatively, the frame 9000 may have a fixed length when transmitted by each communication node 1. In that case, a communication node 1 attempting to transmit a large quantity of data may divide the target data into a plurality of frames for transmission using a setup such as the one shown in Fig. 14.

Fig. 19 depicts a structure wherein a single bus arrangement performs functions of a system bus 81, a storage device bus 21 and a setting device bus 31. Specifically, a system bus 801 is connected to a communication controller 8, a data processor 401 and a storage device 20. The communication controller 8, data processor 401, storage device 20 and CPU 30 operate in the same manner as described earlier.

In the embodiment above, the CPU 30 and communication controller 8 perform write and read operations to and from the access permission flag 4320 and transmission status area 4323 in the transmission/reception information storage circuit 43. Alternatively, the access permission flag 4320 and transmission status area 4323 may be included in the storage device 2 to and from which the CPU 30 and communication controller 8 may effect write and read operations.

As another alternative, all areas of the transmission/reception information storage circuit 43 accessed by the communication controller 8 at the time of transmission (i.e., access permission flag 4320, transmit data storage address area 4321, transmit data length area 4322 and transmission status area 4323) may be included in the storage device 2.

According to the invention, as described, frames are exchanged between the communication controller 8 and the data processor 4. That is, from the viewpoint of the communication controller 8 functioning in conventional fashion, the data processor 4 acts as a virtual storage device (corresponding to the conventional storage device 102). Any conventional communication controller of the comparable type may thus be used unmodified. The CPU 30 is arranged to perform only part of the transmission process as opposed to its conventional counterpart having to take care of all transmission and reception processes. There is no need for the CPU 30 to carry out other communication-related chores including the reception process.

As a result, more CPU loads may be allocated than before to application software unrelated to communication processing. In the inventive setup, the data processor 4 can control the timing of data transmission from the home node in a rapid and reliable manner while carrying out transmission and reception processes at the same time. This makes it possible to transmit or receive frames (i.e., data transfers between the transmission line 9 and the storage device 20) in increments of a unit time hitherto unachievable with conventional systems (on the order of tens of microseconds or less). With the conventional transmission line still in use, the inventive setup provides appreciably improved operating efficiency.

Because the CPU need only perform part of the transmission process as described, greater amounts of CPU loads may be allocated to the handling of application software than before. For example, consider a system in which the CPU performs application programs for executing arithmetic operations using data held in a storage device and storing results of the operations into the storage device, receives data over a transmission line from other communication nodes before placing the received data into the storage device, and transmits computed results from the storage device to other communication nodes over the transmission line. Conventionally, the CPU of the above system is required to handle data transmission and reception processes besides executing arithmetic operations and writing and reading data to and from the storage device. In the inventive setup above, by contrast, the CPU need only perform part of the data transmission process in connection with communication. This affords the CPU significantly increased time periods in which to execute arithmetic operations and to write or read data to or from the storage device.

In terms of processing speed, it takes the CPU of the inventive setup appreciably less time than before to read data from the storage device, perform arithmetic operations on the retrieved data, and write the computed results to the storage device, whereby the operating speed is boosted and the computing cycle is shortened. Illustratively, there exists in the industrial field a system in which data are collected from terminals such as sensors over a network, the collected data being processed by a CPU so that operating instructions based on the processed results are sent over the network to devices under control such as machine tools. If the operating speed is boosted and the computing cycle shortened, the accuracy of control over the configured devices in the system will be improved significantly along with a growing degree of sophistication of control.

As described, the communication system according to the invention is capable of enhancing its overall processing performance with a minimum of increase in the processing loads on the CPU.

**Claims**

1. A real-time communication apparatus comprising:

a communication controller for placing data to be transmitted with a transmission instruction onto a communication line and for writing data received from said transmission line to a storage device; and

a data processor which, upon detecting the writing of the data received by said communication controller, computes a transmission time for data transmission by a communication node having said communication controller, the computing of said transmission time being performed on the basis of the received data and of data established beforehand in said communication node, said data processor further supplying said communication controller with a data transmission instruction causing said communication node to transmit data while counting the computed transmission time starting from a point in time at which completion of the writing of the data by said communication controller is detected.

2. A real-time communication apparatus according to claim 1, wherein said data to be transmitted over said transmission line are held in a frame format defined by IEEE 802.3.

3. A real-time communication system comprising a plurality of communication nodes connected to a transmission line, each of said communication nodes including:

a communication controller for placing data to be transmitted with a transmission instruction onto said communication line and for writing data received from said transmission line to a storage device; and

a data processor which, upon detecting the writing of the data received by said communication controller, computes a transmission time for data transmission by the communication node in question, the computing of said transmission time being performed on the basis of the received data and of data established beforehand in said communication node, said data processor further supplying said communication controller with a data transmission instruction causing said communication node to transmit data while counting the computed transmission time starting from a point in time at which completion of the writing of the data by said communication controller is detected.

4. A real-time communication system according to claim 3, wherein said transmission time is obtained by first detecting an identifier within said received data, by then computing a difference between an identifier established beforehand in said communication node and the received identifier, and by subtracting from a time period indicated by the computed difference a time period that elapses from the data transmission until the data reception.

5. A real-time communication system according to claim 3 or 4, wherein the data to be written by said communication controller are discarded during transmission processing performed by said data processor, and wherein no data transmission takes place if said transmission time is reached during reception processing performed by said data processor.

6. A real-time communication system according to claim 3, 4 or 5, wherein said data to be transmitted over said transmission line are held in a frame format defined by IEEE 802.3.

7. A real-time communication apparatus comprising:

a storage device for storing either data to be transmitted or received data;

a communication controller for placing data to be transmitted with a transmission instruction onto a communication line and for writing data received from said transmission line to said storage device;

a CPU which supplies said communication controller with a transmission instruction, which verifies whether said communication controller has ended the transmission, and which refrains from supplying said communication controller with a transmission instruction if a transmission start time is reached during reception processing; and

a data processor for discarding the data received by said communication controller during transmission processing.

8. A real-time communication apparatus according to claim 7, wherein said data processor, upon detecting the writing of the data received by said communication controller, computes a transmission time for data transmission by a communication node having said communication controller, the computing of said transmission time being performed on the basis of the received data and of data established beforehand in said communication node, said data processor further supplying said communication controller with a data transmission instruction causing said communication node to transmit data while counting the computed transmission time starting from a point in time at which completion of the writing of the data by said communication controller is detected.

9. A real-time communication system according to claim 8, wherein said transmission time is obtained by first detecting an identifier within said received data, by then computing a difference between an identifier established beforehand in said communication node and the received identifier, and by subtracting from a time period indicated by the computed difference a time period that elapses from the data transmission until the data reception.

10. A real-time communication apparatus according to claim 7, 8 or 9, wherein said data to be transmitted over said transmission line are held in a frame format defined by IEEE 802.3.

11. A real-time communication system comprising a plurality of communication nodes connected to a transmission line, each of said communication nodes including:

   a storage device for storing either data to be transmitted or received data;
   a communication controller for placing data to be transmitted with a transmission instruction onto said communication line and for writing data received from said transmission line to said storage device;
   a CPU which supplies said communication controller with a transmission instruction, which verifies whether said communication controller has ended the transmission, and which refrains from supplying said communication controller with a transmission instruction if a transmission start time is reached during reception processing; and
   a data processor for discarding the data received by said communication controller during transmission processing.

12. A real-time communication system according to claim 11, wherein said data processor, upon detecting the writing of the data received by said communication controller, computes a transmission time for data transmission by the communication node in question, the computing of said transmission time being performed on the basis of the received data and of data established beforehand in said communication node, said data processor further supplying said communication controller with a data transmission instruction causing said communication node to transmit data while counting the computed transmission time starting from a point in time at which completion of the writing of the data by said communication controller is detected.

13. A real-time communication system according to claim 12, wherein said transmission time is obtained by first detecting an identifier within said received data, by then computing a difference between an identifier established beforehand in said communication node and the received identifier, and by subtracting from a time period indicated by the computed difference a time period that elapses from the data transmission until the data reception.

14. A real-time communication system according to claim 11, 12 or 13, wherein said data to be transmitted over said transmission line are held in a frame format defined by IEEE 802.3.

# FIG. 1

COMMUNICATION NODE

STORAGE DEVICE

COMMUNICATION CONTROL INFORMATION SETTING DEVICE

STORAGE DEVICE BUS

SETTING DEVICE BUS

DATA PROCESSOR

SYSTEM BUS

COMMUNICATION CONTROLLER

TRANSMISSION LINE

# F I G . 2

STORAGE DEVICE BUS — 21

41

31 — SETTING DEVICE BUS

HIGH-ORDER BUS INTERFACE CIRCUIT

DATA READ/WRITE DESIGNATION SIGNAL

DATA READ/WRITE STATUS SIGNAL

45

43

TRANSMISSION/RECEPTION INFORMATION STORAGE CIRCUIT

TRANSMISSION/RECEPTION STATUS INFORMATION

42

44

TRANSMISSION/RECEPTION INFORMATION STORAGE CIRCUIT READ/WRITE SELECTION SIGNAL

COMMUNICATION CONTROL CIRCUIT

ERROR STATUS INFORMATION

COMMUNICATION CONTROL INFORMATION REGISTER CIRCUIT

TRANSMISSION/RECEPTION BUFFER

TRANSMISSION/RECEPTION BUFFER READ/WRITE SELECTION SIGNAL

SETTING INFORMATION

INTERNAL DATA BUS

INTERNAL ADDRESS BUS

COMMUNICATION STATUS NOTIFI-CATION SIGNAL

TRANSMISSION START DESIGNATION SIGNAL

46   47

READ/WRITE NOTIFICATION SIGNAL

SETTING INFORMATION

SYSTEM BUS INTERFACE CIRCUIT

48

SYSTEM BUS — 81

4

EP 1 119 141 A1

# FIG.3

# FIG.4

TRANSMIT DATA STORAGE ADDRESS REGISTER — 4521 → TO STORAGE DEVICE READ/WRITE CONTROL CIRCUIT 421

ACCESS-PERMITTED ADDRESS AREA REGISTER — 4522 → TO STORAGE DEVICE ADDRESS DETECTION CIRCUIT 4272

HOME NODE TRANSMISSION ORDER IDENTIFIER REGISTER — 4523 → TO ARITHMETIC CIRCUIT 424

TRANSMISSION ORDER IDENTIFIER MAXIMUM VALUE REGISTER — 4524 → TO ARITHMETIC CIRCUIT 424

TRANSMIT DATA QUANTITY REGISTER — 4525 → TO STORAGE DEVICE READ/WRITE CONTROL CIRCUIT 421

TIMER INITIAL VALUE REGISTER → TO TRANSMISSION TIMER CIRCUIT 422 — 4526

TRANSMISSION STATUS REGISTER (INCLUDING TRANSMISSION PROCESS CONFLICT STATUS) — 4527

RECEPTION STATUS REGISTER (INCLUDING RECEPTION PROCESS CONFLICT STATUS) — 4528

46 INTERNAL ADDRESS BUS

47 INTERNAL DATA BUS

451 REGISTER SELECTION CIRCUIT

452

ERROR STATUS INFORMATION
FROM TRANSMISSION/RECEPTION STATUS DETECTION CIRCUIT 423

EP 1 119 141 A1

# F I G . 5

INTERNAL DATA BUS

47

431

AREA SELECTION CIRCUIT

TRANSMISSION/ RECEPTION INFORMATION STORAGE CIRCUIT READ/WRITE SELECTION SIGNAL

FROM ADDRESS DECODER CIRCUIT 426

432

TRANSMIT DATA STORAGE ADDRESS AREA — 4321

TRANSMIT DATA LENGTH AREA — 4322

4323

TRANSMISSION STATUS AREA

RECEIVE DATA STORAGE ADDRESS AREA

RECEIVE DATA LENGTH AREA — 4324

— 4325

RECEPTION STATUS AREA — 4326

TRANSMISSION/ RECEPTION STATUS INFORMATION

TO TRANSMISSION/ RECEPTION STATUS DETECTION CIRCUIT 423

EP 1 119 141 A1

# F I G.6

441    442

| BUFFER AREA SELECTION CIRCUIT |

INTERNAL DATA BUS

47

TRANSMISSION/ RECEPTION BUFFER READ/WRITE SELECTION SIGNAL

FROM ADDRESS DECODER CIRCUIT 426

1ST BYTE TO 4TH BYTE

5TH BYTE TO 8TH BYTE

9TH BYTE TO 12TH BYTE

13TH BYTE TO 16TH BYTE

17TH BYTE TO 20TH BYTE

21ST BYTE TO 24TH BYTE

25TH BYTE TO 28TH BYTE

29TH BYTE TO 32ND BYTE

EP 1 119 141 A1

# FIG.7

| FRAME START FLAG | DESTI-NATION ADDRESS | TRANS-MISSION ORDER INDENTI-FIER | DATA LENGTH | STORAGE DEVICE ADDRESS | DATA | CRC CHECK AREA |
|---|---|---|---|---|---|---|
| 9001 | 9002 | 9003 | 9004 | 9005 | 9006 | 9007 |

FRAME

9000

EP 1 119 141 A1

# F I G . 8

▽TRANSMISSION TIMER SET TIMING (SET VALUE:τtim)
TRANSMISSION:TRANSMISSION PROCESS TIME
RECEPTION:RECEPTION PROCESS TIME

|← UNIT TIME τo →|

IF UNIT TIME IS REPRESENTED BY τ0, TRANSMISSION ORDER IDENTIFIER OF HOME NODE BY Tid, TRANSMISSION ORDER IDENTIFIER OF RECEIVED FRAME BY Trcv, AND MAXIMUM VALUE OF TRANSMISSION ORDER IDENTIFIER BY Tmax, THEN TIMER SET VALUE τtim IS COMPUTED AS FOLLOWS:

$$[Tid-Trcv>0] \quad \tau tim=(Tid-Trcv-1)\times\tau0$$
$$[Tid-Trcv<0] \quad \tau tim=(Tid-Trcv-1+Tmax)\times\tau0$$

COMMUNICATION NODE 0

| TRANS-MISSION | RECEP-TION | RECEP-TION | RECEP-TION | TRANS-MISSION | RECEP-TION |
| Tid=0 | Trcv=1 | Trcv=2 | Trcv=3 | Tid=0 | Trcv=1 |

7651 7652 7653 7655 7554 7550

COMMUNICATION NODE 1

| RECEP-TION | TRANS-MISSION | RECEP-TION | RECEP-TION | RECEP-TION | TRANS-MISSION |
| Trcv=0 | Tid=1 | Trcv=2 | Trcv=3 | Trcv=0 | Tid=1 |

7561 7662 7663 7565 7660

COMMUNICATION NODE 2

| RECEP-TION | RECEP-TION | TRANS-MISSION | RECEP-TION | RECEP-TION | RECEP-TION |
| Trcv=0 | Trcv=1 | Tid=2 | Trcv=3 | Trcv=0 | Trcv=1 |

7671 7572 7673 7664 7675 7670

COMMUNICATION NODE 3

| RECEP-TION | RECEP-TION | RECEP-TION | TRANS-MISSION | RECEP-TION | RECEP-TION |
| Trcv=0 | Trcv=1 | Trcv=2 | Tid=3 | Trcv=0 | Trcv=1 |

7681 7682 7583 7674 7685 7680 7684

TIME ——→

EP 1 119 141 A1

# F I G.9

| NODE NO. | TRANSMIT DATA LENGTH |
|----------|----------------------|
| NODE 0 | 32 BYTES |
| NODE 1 | 96 BYTES |
| NODE 2 | 32 BYTES |
| NODE 3 | 64 BYTES |

**DETERMINATION OF TRANSMISSION ORDER**

| NODE NO. | TRANSMITTION ORDER IDENTIFIER |
|----------|-------------------------------|
| NODE 0 | 0 |
| NODE 1 | 1 |
| NODE 2 | 4 |
| NODE 3 | 5 |

TRANS-MISSION ORDER ···

| UNIT TIME 0 | 1 | 2 | 3 | 4 | 5 | 6 | 0 |

TRANS-MISSION NODE ···

| TRANS-MITTED BY NODE 0 | TRANS-MITTED BY NODE 1 | TRANS-MITTED BY NODE 1 | TRANS-MITTED BY NODE 1 | TRANS-MITTED BY NODE 2 | TRANS-MITTED BY NODE 3 | TRANS-MITTED BY NODE 3 | ··· |

TIME ⟶

**FRAME TRANSMISSION STATUS ON TRANSMISSION LINE**

TRANS-MISSION ORDER ···

| 0 | 1~3 | 4 | 5~6 | 0 | 1~3 | 4 |

TRANS-MISSION FRAME ···

| NODE 0 | NODE 1 | NODE2 | NODE 3 | NODE0 | NODE 1 | NODE2 |

TIME ⟶

EP 1 119 141 A1

# FIG.10

[TRANSMITSSION PROCESS]

[RECEPTION PROCESS]

```
( TIME-OUT ON TRANSMISSION      7500
  TIMER(TRANSMISSION PROCESS
  STARTED) )
```

```
7501
TIMER INITIAL VALUE IS SET TO
TRANSMISSION TIMER
```

```
7502
TRANSMIT DATA ARE MOVED FROM
STORAGE DEVICE TO TRANSMISSION/
RECEPTION BUFFER THROUGH DMA
TRANSFER
```

```
7503
COMMUNICATION CONTROLLER IS
INSTRUCTED TO START TRANSMISSION
```

```
7504
COMMUNICATION CONTROLLER READS
FROM TRANSMISSION INFORMATION
STORAGE CIRCUIT
```

```
7505
COMMUNICATION CONTROLLER READS
TRANSMIT DATA FROM TRANSMISSION/
RECEPTION BUFFER( DATA PROCESSOR
CAUSES COMMUNICATION CONTROLLER
TO READ THE DATA WHILE CREATING
TRANSMISSION FRAME CONTAINING THE
TRANSMIT DATA.
TRANSMISSION ORDER IDENTIFIER AND
STORAGE DEVICE ADDRESS ARE PLACED
INTO HEADER )
```

```
7506
COMMUNICATION CONTROLLER
TRANSMITS TRANSMISSION FRAME
ONTO TRANSMISSION LINE
```

```
7507
COMMUNICATION CONTROLLER WRITES
STATUS OF TRANSMISSION FRAME TO
TRANSMISSION INFORMATION STORAGE
CIRCUIT
```

```
7508
( TRANSMISSION STATUS IS COPIED
  FROM TRANSMISSION INFORMATION
  STORAGE CIRCUIT TO STATUS
  REGISTER ( END OF TRANSMISSION
  PROCESS ) )
```

```
( COMMUNICATION CONTROLLER
  RECEIVES FRAME FROM TRANS-
  MISSION LINE( RECEPTION
  PROCESS STARTED ) )
```

```
7600  7601
COMMUNICATION CONTROLLER WRITES
RECEIVED FRAME TO RECEPTION
BUFFER( DATA PROCESSOR WRITES
TO TRANSMISSION/RECEPTION
BUFFER ONLY THE RECEIVE DATA
FROM WITHIN RECEIVED FRAME
WRITTEN BY COMMUNICATION
CONTROLLER. TRANSMISSION ORDER
IDENTIFIER AND STORAGE DEVICE
ADDRESS ARE EXTRACTED FROM
HEADER.)
```

```
7602
COMMUNICATION CONTROLLER WRITES
RECEPTION STATUS TO RECEPTION
INFORMATION STORAGE CIRCUIT
```

```
7603
TRANSMISSION STATUS IS COPIED
FROM RECEPTION INFORMATION
STORAGE CIRCUIT TO STATUS
REGISTER
```

NO RECEPTION ERROR

RECEPTION ERROR DETECTED

```
RECEIVE DATA ARE WRITTEN FROM
TRANSMISSION/RECEPTION BUFFER
THROUGH DMA TRANSFER TO STORAGE
DEVICE IN ACCORDANCE WITH
EXTRACTED STORAGE DEVICE ADDRESS.
TRANSMISSION TIMING IS COMPUTED
BASED ON EXTRACTED TRANSMISSION
ORDER IDENTIFIER AND ON HOME NODE
TRANSMISSION ORDER IDETIFIER, AND
COMPUTED TIMING IS SET TO TRANS-
MISSION TIMER( END OF RECETTION
PROCESS )
```

```
7605   7604
( RECEIVED DATA ARE DISCARED FROM
  TRANSMISSION/RECEPTION BUFFER
  ( END OF RECEPTION PROCESS ) )
```

# F I G.11

TRANSMISSION OVER TRANSMISSION LINE  —8003

TRANSMISSION ENDED

8004

8001

TRANSMISSION STARTED

TRANSMISSION STATUS IS WRITTEN TO TRANSMISSION INFORMATION STORAGE AREA

INFORMATION ABOUT TRANSMISSION BUFFER IN WHICH TO PLACE TRANSMISSION FRAME IS READ FROM TRANSMISSION FRAME STORAGE AREA

TRANSMISSION FRAME IS READ FROM TRANSMISSION BUFFER  —8002

TRANSMISSION START COMMAND ISSUED

STATE IN WHICH TO WAIT FOR TRANSMISSION OR RECEPTION OVER TRANSMISSION LINE  —8000

SEARCH FOR RECEPTION BUFFER (PERIODICALLY PERFORMED UNTIL AVAILABLE BUFFER IS FOUND)

8008

RECEPTION STARTED

INFORMATION ABOUT RECEPTION BUFFER IN WHICH TO PLACE NEXT TRANSMISSION FRAME IS READ FROM TRANSMISSION INFORMATION STORAGE AREA

8006

RECEPTION OVER TRANSMISSION LINE

RECEPTION STATUS IS WRITTEN TO RECEPTION INFORMATION STORAGE AREA

8005

TRANSMISSION FRAME IS WRITTEN TO TRANSMISSION BUFFER  —8007

EP 1 119 141 A1

# F I G.12

EP 1 119 141 A1

# FIG.13

EP 1 119 141 A1

| COMMUNICATION NODE | | COMMUNICATION NODE | | | COMMUNICATION NODE |

906    9    906    906

REPEATER ~905

906    9    906    906

| COMMUNICATION NODE | | COMMUNICATION NODE | 906 | COMMUNICATION NODE |

# FIG.14

**46** INTERNAL ADDRESS BUS

**47** INTERNAL DATA BUS

**451** REGISTER SELECTION CIRCUIT

ERROR STATUS INFORMATION

FROM TRANSMISSION/ RECEPTION STATUS DETECTION CIRCUIT 423

**452**

**4521** TRANSMIT DATA STORAGE ADDRESS REGISTER → TO STORAGE DEVICE READ/ WRITE CONTROL CIRCUIT 421

**4522** ACCESS-PERMITTED ADDRESS AREA REGISTER → TO STORAGE DEVICE ADDRESS DETECTION CIRCUIT 4272

**4523** HOME NODE TRANSMISSION ORDER IDENTIFIER REGISTER → TO ARITHMETIC CIRCUIT 424

**4524** TRANSMISSION ORDER IDENTIFIER MAXIMUM VALUE REGISTER → TO ARITHMETIC CIRCUIT 424

**4529** TRANSMIT DATA QUANTITY REGISTER → TO STORAGE DEVICE READ/ WRITE CONTROL CIRCUIT 421 AND ADDRESS DECODER CIRCUIT 426

TIMER INITIAL VALUE REGISTER → TO TRANSMISSION TIMER CIRCUIT 422

**4526** TRANSMISSION STATUS REGISTER (INCLUDING TRANS-MISSION PROCESS CONFLICT STATUS)

**4527** **4528** RECEPTION STATUS REGISTER (INCLUDING RECEPTION PROCESS CONFLICT STATUS)

EP 1 119 141 A1

# F I G.15

| NODE NO. | TRANSMIT DATA LENGTH |
|---|---|
| NODE0 | 32BYTES |
| NODE1 | 96BYTES |
| NODE2 | 32BYTES |
| NODE3 | 64BYTES |

DETERMINATION OF TRANSMISSION ORDER

| NODE NO. | TRANSMISSION ORDER IDENTIFIER | TRANSMISSION FRAME COUNT |
|---|---|---|
| NODE0 | 0 | 1 |
| NODE1 | 1 | 3 |
| NODE2 | 4 | 1 |
| NODE3 | 5 | 2 |

TRANS-MISSION ORDER ···

UNIT TIME

| 0 | 1 | 2 | 3 | 4 | 5 | 6 | 0 |

TRANS-MISSION NODE ···

| TRANS-MITTED BY NODE 0 | TRANS-MITTED BY NODE 1 | TRANS-MITTED BY NODE 1 | TRANS-MITTED BY NODE 1 | TRANS-MITTED BY NODE 2 | TRANS-MITTED BY NODE 3 | TRANS-MITTED BY NODE 3 | · · · |

TIME ──→

FRAME TRANSMISSION STATUS ON TRANSMISSION LINE

TRANS-MISSION ORDER ···

| 0 | 1 | 2 | 3 | 4 | 5 | 6 | 0 | 1 | 2 | 3 | 4 |

TRANS-MISSION FRAME ···

| NODE0 | NODE1 | NODE1 | NODE1 | NODE2 | NODE3 | NODE3 | NODE0 | NODE1 | NODE1 | NODE1 |

TIME ──→

EP 1 119 141 A1

# F I G. 16

COMMUNICATION NODE

**3**

COMMUNICATION CONTROL INFORMATION SETTING DEVICE

STORAGE DEVICE

**2**

**801**

SYSTEM BUS

**8**

**401**

COMMUNICATION CONTROLLER

DATA PROCESSOR

TRANSMISSION LINE

**9**

# F I G.17

COMMUNICATION NODE

STORAGE DEVICE — 2

CPU — 30

STORAGE DEVICE BUS — 21

COMMUNICATION PROCESSING BUS — 31

DATA PROCESSOR — 4

SYSTEM BUS — 81

COMMUNICATION CONTROLLER — 8

TRANSMISSION LINE

9

# F I G.18

EP 1 119 141 A1

# F I G.19

COMMUNICATION
NODE

30
CPU

STORAGE
DEVICE
2

801
SYSTEM BUS

8
COMMUNICATION
CONTROLLER

401
DATA
PROCESSOR

TRANSMISSION
LINE

9

33

**EP 1 119 141 A1**

## INTERNATIONAL SEARCH REPORT

| | International application No. |
|---|---|
| | PCT/JP99/04581 |

A. CLASSIFICATION OF SUBJECT MATTER
   Int. Cl$^6$ H04L 12/40

According to International Patent Classification (IPC) or to both national classification and IPC

B. FIELDS SEARCHED

Minimum documentation searched (classification system followed by classification symbols)
   Int. Cl$^6$ H04L 12/40

Documentation searched other than minimum documentation to the extent that such documents are included in the fields searched
   Jitsuyo Shinan Koho          1926-1996      Toroku Jitsuyo Shinan Koho  1994-1999
   Kokai Jitsuyo Shinan Koho   1971-1999      Jitsuyo Shinan Toroku Koho  1996-1999

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP, 04-26247, A (NEC Corporation),<br>29 January, 1992 (29.01.92)   (Family: none) | 1-14 |
| A | JP, 01-26247, A (Hitachi Cable, Ltd.),<br>29 September, 1989 (29.09.89)   (Family: none) | 1-14 |
| A | JP, 62-169542, A (NEC Corporation),<br>25 July, 1987 (25.07.87)   (Family: none) | 1-14 |

☐ Further documents are listed in the continuation of Box C.      ☐ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 November, 1999 (24.11.99) | 07 December, 1999 (07.12.99) |

| Name and mailing address of the ISA/ | Authorized officer |
|---|---|
| Japanese Patent Office | |
| Facsimile No. | Telephone No. |

Form PCT/ISA/210 (second sheet) (July 1992)